# EUROPÄISCHE PATENTSCHRIFT

(11) **EP 0 751 654 B1**
(45) Veröffentlichungstag und Bekanntmachung des Hinweises auf die Patenterteilung: **25.08.2004**
(21) Anmeldenummer: 96106815.2
(22) Anmeldetag: 30.04.1996
(51) Int. Cl.: H04L 27/26

(54) **Rahmensynchronisierung, insbesondere für Mehrträgermodulationssignale**
Frame synchronisation, particularly for MCM
Synchronisation de trame, en particulier pour signaux à modulation multiporteuse

(30) Priorität: 28.06.1995 DE 19523402
(43) Veröffentlichungstag der Anmeldung: 02.01.1997
(73) Patentinhaber: ROBERT BOSCH GMBH, 70442 Stuttgart (DE)
(72) Erfinder: Bolle, Michael, Dr. Ing., 30880 Laatzen (DE); Stepen, Markus, 31137 Hildesheim (DE)

(56) Entgegenhaltungen:
- US-A- 5 191 576
- WARNER W D ET AL: "OFDM/FM FRAME SYNCHRONIZATION FOR MOBILE RADIO DATA COMMUNICATION" IEEE TRANSACTIONS ON VEHICULAR TECHNOLOGY,US,IEEE INC. NEW YORK, Bd. 42, Nr. 3, 1. August 1993 (1993-08-01), Seiten 302-313, XP000394042 ISSN: 0018-9545

## Beschreibung

Die Erfindung betrifft ein Verfahren und eine Schaltungsanordnung zur Ableitung eines Rahmen-Synchronisiersignals aus einem empfangenen trägerfrequenten Signal, das digitale Informationen in einer Rahmenstruktur enthält und in mindestens einem Zeitschlitz jeweils eines Rahmens eine gegenüber anderen Zeitschlitzen verringerte Amplitude aufweist.

Bei digitalen Übertragungsverfahren nach dem COFDM-Prinzip wird eine Unterteilung des Sendesignals in Rahmen vorgenommen, die ihrerseits wieder aus Symbolen aufgebaut sind. Zur Rahmensynchronisation des Empfängers ist ein sogenanntes Null-Symbol vorgesehen, das darin besteht, daß die während des Symbols vorhandene Sendeleistung sehr viel geringer ist als während der übrigen Symbole. Ein typischer Wert für diesen Leistungsunterschied ist 16 dB. Dieses Signalformat ist beispielsweise in dem europäischen Telekommunikationsstandard Pr ETS 300 401, DAB System Spezification beschrieben.

Die zeitliche Position des Null-Symbols und damit die Ableitung eines Synchronisiersignals im Empfänger kann durch einen herkömmlichen Hüllkurvendetektor auf der Analog-Ebene erfolgen. Dabei sind Ungenauigkeiten nicht ausgeschlossen und - wie häufig bei Analogschaltungen - Abgleicharbeiten erforderlich.

Es ist ferner ein Verfahren zur digitalen Rahmensynchronisation bekanntgeworden (DE 44 05 752 C1), das die Vorteile von digitalen Schaltungen nutzt, jedoch ein Filter enthält, dessen Koeffizienten umschaltbar sind. Ein solches Matched Filter ist in Couch, Leon W: "Digital and analog communication systems", 4th ed., New York, MacMillan Publishing Company, 1993, S. 547-558, ISBN 0-02-325281-2, erläutert.

Aus der Veröffentlichung "OFDM/FM Frame Synchronization for Mobile Radio Data Communication" von Warner und Leung, erschienen in der Reihe IEEE Transactions on Vehicular Technology am 3. August 1993 ist ein Synchronisationsverfahren für ein OFDM/FM-System bekannt, das in einer ALOHA-Umgebung betrieben wird. Die Synchronisationsinformation ist in Tönen enthalten, die in speziellen, reservierten OFDM-Frequenzunterkanälen übertragen werden und vom Empfänger mittels Korrelation im Frequenzraum paketweise erkannt werden.

Aus der US 5,191,576 ist ein Übertragungsverfahren für digitale Daten in einer urbanen Gegend bekannt, bei dem Störungen durch Streuungen, Störeinflüsse und Mehrwegeausbreitung vorhanden sind. Die Header eines jeden Rahmens weist ein erstes Nullsymbol als Synchronisationssignal auf, sowie eventuell ein zweites, unmoduliertes, gewobbeltes Signal, das ein 2-stufiges analoges Synchronisationssystem bildet.

Aufgabe der vorliegenden Erfindung ist es, ein Verfahren zur Ableitung eines Rahmen-Synchronisiersignals aus einem empfangenen trägerfrequenten Signal anzugeben, mit dem die Positionsbestimmung des Null-Symbols hohen Genauigkeitsanforderungen genügt und der Realisierungsaufwand geringer als bei den bekannten Verfahren ist.

Bei dem erfindungsgemäßen Verfahren wird diese Aufgabe dadurch gelöst,
- daß das empfangene Signal in einen niedrigeren Frequenzbereich umgesetzt wird,
- daß das umgesetzte Signal einer Analog/Digital-Wandlung unterzogen wird,
- daß aus dem entstandenen digitalen Signal ein Kurzzeitleistungssignal und ein Langzeitleistungssignal gebildet werden und
- daß das Langzeitleistungssignal und das Kurzzeitleistungssignal verglichen werden.

Das erfindungsgemäße Verfahren gewährleistet die Ableitung des Rahmen-Synchronisiersignals mit großer Genauigkeit bei geringem Realisiserungsaufwand. Das empfangene Signal kann im Rahmen des erfindungsgemäßen Verfahrens in eine Zwischenfrequenzlage oder in das Basisband umgesetzt werden.

Insbesondere bei Signalen mit verschiedenen Modi, wie bei dem DAB-System (= Digital Audio Broadcasting) wird der Realisierungsaufwand dadurch verringert, daß das Kurzzeitleistungssignal vor dem Vergleich einer Abtastraten-Dezimation und anschließend einer Mittelung unterzogen wird, wobei die Dezimationsrate in Abhängigkeit von dem jeweiligen Modus des empfangenen Signals einstellbar ist und die Mittelung über eine konstante Zahl von Abtastwerten erfolgt.

Bei einer Umsetzung des empfangenen Signals von der Analog/Digital-Wandlung in eine Zwischenfrequenzlage ist es vorteilhaft, wenn das digitale Signal einer I/Q-Demodulation unterzogen wird und eine Inphase- und eine Quadraturkomponente des demodulierten digitalen Signals zur Bildung des Kurzzeitleistungssignals und des Langzeitleistungssignals herangezogen werden. Eine Verwendung lediglich einer der Komponenten ist bei dem erfindungsgemäßen Verfahren jedoch auch möglich.

Eine zuverlässige Ermittlung des Null-Symbols ist auch bei einer stark schwankenden Amplitude des empfangenen Signals gemäß einer Weiterbildung des erfindungsgemäßen Verfahrens dadurch möglich, daß zu Zwecken des Vergleichs die Differenz zwischen dem Kurzzeitleistungssignal und dem Langzeitleistungssignal einer Schwellwertschaltung zugeführt wird, deren Ausgangssignal dem über einen Schwellwert hinausgehenden Teil der Differenz entspricht, wobei der Schwellwert von dem mit einem Faktor bewerteten Langzeitleistungssignal gebildet wird, und daß das Ausgangssignal der Schwellwertschaltung einem Maximumdetektor zugeleitet wird, der das Rahmen-Synchronisiersignal abgibt, wenn das Ausgangssignal der Schwellwertschaltung jeweils einen Maximalwert erreicht.

Bei einer vorteilhaften Schaltungsanordnung zur Durchführung des erfindungsgemäßen Verfahrens ist ein Prozessor vorgesehen, in welchem eine Signalverarbeitung entsprechend den einzelnen Schritten des Verfahrens erfolgt.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines Ausführungsbeispiels,
- Fig. 2: Teile des Ausführungsbeispiels, die zu einer kombinierten Mittelung und Dezimation dienen,
- Fig. 3: ein für das Ausführungsbeispiel nach Fig. 3 geeignetes Digitalfilter,
- Fig. 4: eine Schaltung zur Bestimmung eines Langzeitleistungswertes,
- Fig. 5: ein Ausführungsbeispiel für einen in dem Ausführungsbeispiel enthaltenen Maximumdetektor,
- Fig. 6: den Amplitudenverlauf eines empfangenen Signals und
- Fig. 7: den Verlauf von Signalen, die bei dem Ausführungsbeispiel nach Fig. 1 auftreten.

Das Ausführungsbeispiel sowie Teile davon sind zwar als Blockschaltbilder dargestellt. Dieses bedeutet jedoch nicht, daß die Erfindung auf eine Realisierung mit Hilfe von einzelnen den Blöcken entsprechenden Schaltungen beschränkt ist. Die Erfindung ist vielmehr in besonders vorteilhafter Weise mit Hilfe von hochintegrierten Schaltungen realisierbar. Dabei können digitale Signalprozessoren eingesetzt werden, welche bei geeigneter Programmierung die in den Blockschaltbildern dargestellten Verarbeitungsschritte durchführen.

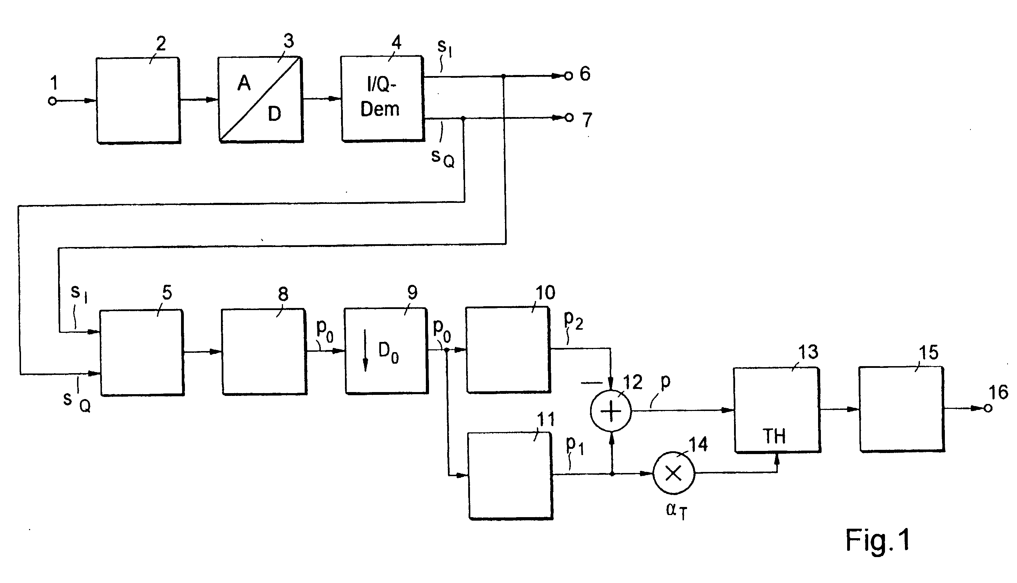

Dem Ausführungsbeispiel nach Fig. 1 wird bei 1 das empfangene Signal zugeführt und gelangt in einen Empfangsteil (Tuner) 2, wo es in eine Zwischenfrequenzlage umgesetzt wird. Das dadurch entstandene analoge Signal wird mit Hilfe eines Analog/Digital-Wandlers 3 in ein digitales Signal umgewandelt. Anschließend wird eine digitale I/Q-Demodulation durchgeführt, wodurch eine digitale Inphase- und eine digitale Quadraturkomponente sᵢ und s_{q} entstehen. Die Komponentensignale sᵢ und s_{q} sind Ausgängen 6, 7 zur weiteren Verarbeitung, insbesondere zur Decodierung, entnehmbar, wozu das mit Hilfe der Erfindung abgeleitete Synchronisiersignal benötigt wird.

Die Komponentensignale sᵢ und s_{q}, die das sogenannte komplexe Basisband bilden, werden der Bildung einer Augenblicksleistung bei 5 zugeführt. Dies kann beispielsweise durch eine Tabelle, durch Multiplizierer oder durch eine Betragsbildung der Quadraturkomponenten erfolgen. Durch Mittelung der Augenblicksleistungwerte über eine vorbestimmte Anzahl D₀ von Abtastwerten bei 8 entsteht ein Kurzzeitleistungssignal p₀.

Für die im DAB-System vorliegenden Parameter ist die vorbestimmte Anzahl D₀ für die in dem DAB-System spezifizierten Modi I, II, III 128, 32 und 16. Dabei wird eine Abtastrate des komplexen Basisbandes von 2,048 MHz vorausgesetzt. Durch die Mittelung weist das Kurzzeitleistungssignal p₀ einen niedrigeren Frequenzbereich auf und kann deshalb um den Faktor D₀ bei 9 dezimiert werden. Dadurch können die folgenden Schaltungen mit einer um D₀ geringeren Abtastrate betrieben werden. Wegen des gleichen Informationsgehaltes wird das Ausgangssignal der Dezimationsschaltung 9 in den Figuren 1 bis 4 ebenfalls mit p₀ bezeichnet. Es wird einem Digitalfilter 10 und einer Schaltung 11 zur Langzeitleistungsermittlung zugeführt. Die obengenannten Werte von D₀ (128, 32, 16) verhalten sich wie die Längen der Nullsymbole in den drei Übertragungsmodi. Somit geschieht die weitere Verarbeitung des mit D₀ abtastraten-reduzierten Signals p₀ unabhängig vom Übertragungsmodus. Deshalb ist die im folgenden beschriebene Zahl D₂ für alle Übertragungsmodi konstant.

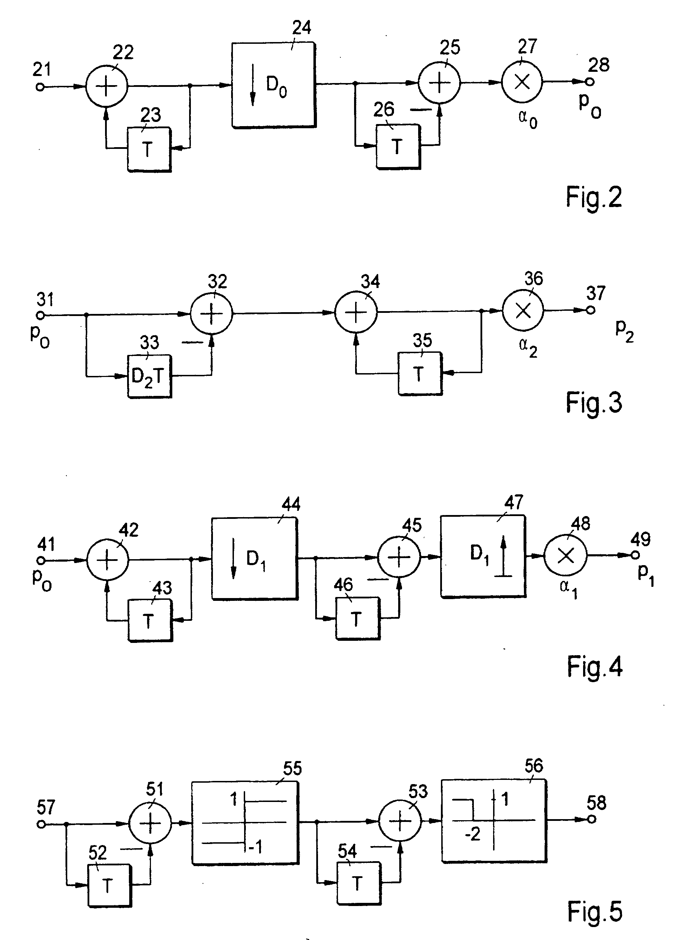

Das Digitalfilter 10 ist dem zu detektierenden Null-Symbol nach dem Prinzip des Matched Filters angepaßt. Ein optimales Verhalten liegt vor, wenn das Digitalfilter im Falle des DAB-Systems eine Mittelung über D₂ = 21 Abtastwerte durchführt. In diesem Fall überstreicht die effektive Mittelung der Signalabtastwerte genau das Null-Symbol. Im allgemeinen Fall gilt D₂ = [T_{Null}F_{c}/D₁]. Hierbei ist T_{Null} die Dauer des Null-Symbols und F_{c} die Abtastrate der Signale im komplexen Basisband. Eine geeignete Schaltung für das Digitalfilter wird später im Zusammenhang mit Fig. 3 beschrieben.

Die Schaltung 11 zur Ermittlung der Langzeitleistung des Signals p₀ mittelt dieses Signal über einen wesentlich längeren Zeitraum von beispielsweise D₁ = 512 Abtastwerten. Durch Differenzbildung der Ausgangssignale p₂ bzw. p₁ des Digitalfilters 10 und der Schaltung 11 entsteht bei 12 ein Differenzsignal p, das einer Schwellwertschaltung 13 zugeführt wird. Der Schwellwert TH entspricht dem durch einen Faktor α_{T} bei 14 bewerteten Langzeitleistungssignal am Ausgang der Schaltung 11. Als vorteilhaft hat sich ein Schwellwert in der Höhe von α_{T} = 3/4 des Langzeitleistungssignals herausgestellt.

Das Ausgangssignal der Schwellwertschaltung 13 ist bereits ein grobes Maß für die Position des Null-Symbols. Die Breite des somit generierten Fenstersignals ist jedoch abhängig vom Pegel des Empfangssignals und entspricht damit im allgemeinen auch nicht der Breite des Null-Symbols. Bei dem in Fig. 1 dargestellten Ausführungsbeispiel ist daher ein Maximumdetektor 15 vorgesehen, dem das Differenzsignal p dann zugeführt wird, wenn der Schwellwert TH überschritten wird. Damit wird eine Feinlokalisierung des Null-Symbols möglich. Das somit erzeugte Synchronisiersignal kann einem Ausgang 16 entnommen werden.

Bei dem in Fig. 2 dargestellten Blockschaltbild der Mittelung 8 (Fig. 1) und der Dezimation 9 (Fig. 1) wird das bei 21 zugeführte Augenblicksleistungssignal über ein rekursives Filter geleitet, das aus einem Addierer 22 und einer Verzögerung 23 um eine Abtastperiode besteht. Daraufhin wird bei 24 nur einer von jeweils D₀ Abtastwerten weitergeleitet, worauf sich ein nichtrekursives Filter anschließt, das aus einem Subtrahierer 25 und einer Verzögerung 26 um eine Abtastperiode der herabgesetzten Abtastrate besteht. Anschließend wird das Signal bei 27 mit einem Faktor α₀ bewertet und kann vom Ausgang 28 dem Digitalfilter 10 und der Schaltung 11 (Fig. 1) zugeführt werden. Der Faktor α₀ ist abhängig vom Übertragungsmodus, beträgt beim Modus I 0,25 und bei den Modi II und III 1.

Bei dem Digitalfilter nach Fig. 3 wird das dem Eingang 31 zugeführte Signal p₀ zunächst über ein Filter geleitet, das von einer Subtraktionsschaltung 32 und einer Verzögerung 33 um D₂ Abtastperioden besteht. Daran schließt sich ein rekursives Filter aus einem Addierer 34 und einer Verzögerung 35 um eine Abtastperiode an. Schließlich erfolgt eine Bewertung mit einem Faktor α₂ = 4/D₂ bei 36. Das am Ausgang 37 anstehende Signal kann dem Subtrahierer 12 (Fig. 1) zugeführt werden.

Fig. 4 stellt in detaillierterer Form die Schaltung 11 (Fig. 1) zur Ermittlung der Langzeitleistung dar. Das Signal p₀ wird einem Eingang 41 zugeleitet und gelangt über ein aus einem Addierer 42 und einer Verzögerung 43 um eine Abtastperiode bestehendes rekursives Filter zu einer Dezimationsschaltung 44, bei der nur jeweils jeder D₁-te Abtastwert weitergeleitet wird. Nach einem nichtrekursiven Filter 45, 46 erfolgt bei 47 eine Heraufsetzung der Abtastrate um den Faktor D₁ durch Wiederholung des Eingangswertes, worauf bei 48 eine Bewertung des Signals mit einem Faktor α₁ erfolgt, bevor das Signal bei 49 die Schaltung 11 verläßt. Eine vorteilhafte Dimensionierung liegt mit D₁ = 512 und α₁ = 4/D₁ vor.

Die Faktoren α₁ und α₂ werden verwendet, um die Signale p₁ und p₂ anzugleichen (zu normieren). Dies ist nötig, weil in den beiden Zweigen über unterschiedliche Anzahlen (D₁ und D₂) aufsummiert wird.

Der in Fig. 5 dargestellte Maximumdetektor 15 (Fig. 1) besteht aus zwei digitalen Differenzierern 51, 52; 53, 54, denen sich jeweils ein Schwellwertglied 55, 56 anschließt. Das Schwellwertglied 55 dient als Vorzeichendetektor. Das zweite Schwellwertglied 56 weist einen Schwellwert bei einem Eingangssignal von -2 auf. Dem Eingang 57 wird das Ausgangssignal der Schwellwertschaltung 13 (Fig. 1) zugeleitet. Am Ausgang 58 ist ein Signal abnehmbar, das das Ende des Null-Symbols und damit auch den Beginn des ersten Nutzsymbols anzeigt. Da dem Empfänger durch die Systemspezifikation die Dauer des Null-Symbols bekannt ist, ist die Position des Null-Symbols durch die Kenntnis des Endes genau bestimmt.

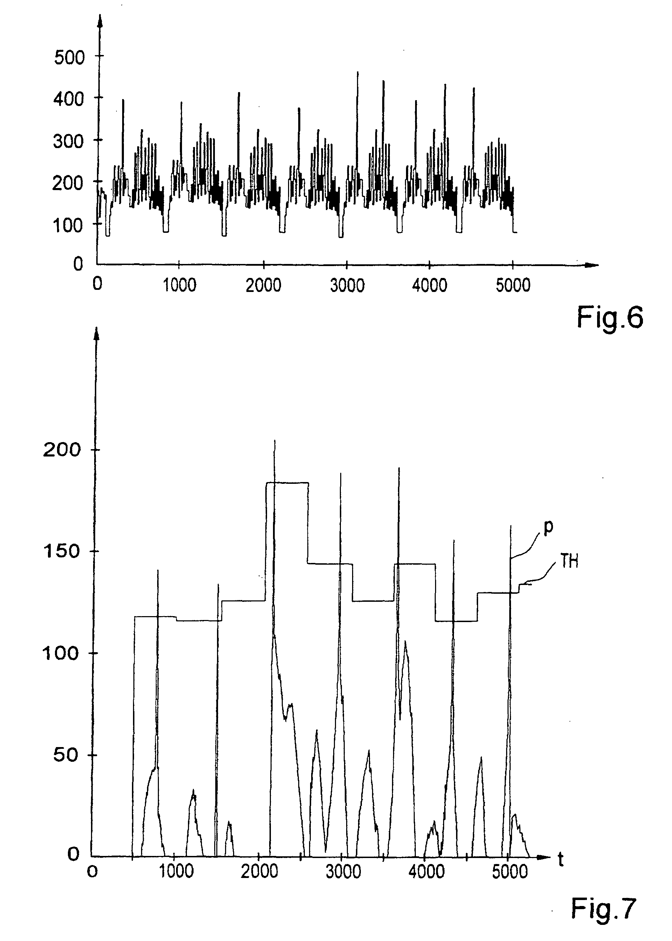

Fig. 6 zeigt die Amplitude des empfangenen Signals, wie es beispielsweise in einem Mobilfunkkanal zu erwarten ist. Es ist ersichtlich, daß die Amplitude des empfangenen Signals sehr stark schwankt. In regelmäßigen Abständen treten die Null-Symbole auf, die mit dem erfindungsgemäßen Verfahren erkannt werden und aus denen das Synchronisiersignal abgeleitet wird. Die Amplitudeneinheiten sind an sich willkürlich gewählt. Es soll mit Fig. 6 lediglich die starke Amplitudenschwankung des empfangenen Signals verdeutlicht werden. Die Einheiten auf der Zeitachse t sind Abtastperioden.

Fig. 7 zeigt den Verlauf des Schwellwertes TH und des Differenzsignals p. Von dem den jeweiligen Schwellwert TH übersteigenden Teil des Signals p wird in dem Maximumdetektor 15 (Fig. 1) der Maximalwert festgestellt. Zu diesen Zeitpunkten wird das Rahmen-Synchronisiersignal erzeugt. In Fig. 7 wurden als Zeiteinheiten wiederum Abtastperioden und als Amplitudeneinheiten willkürliche Einheiten, welche den Zahlenwerten bei der digitalen Signalverarbeitung entsprechen, gewählt.

## Patentansprüche

1. Verfahren zur Ableitung eines Rahmen-Synchronisiersignals aus einem empfangenen trägerfrequenten Signal, das digitale Informationen in einer Rahmenstruktur enthält und in mindestens einem Zeitschlitz jeweils eines Rahmens eine gegenüber anderen Zeitschlitzen verringerte Amplitude aufweist, wobei das empfangene Signal in einen niedrigeren Frequenzbereich umgesetzt wird und das umgesetzte Signal einer Analog/Digital-Wandlung unterzogen wird, **dadurch gekennzeichnet dass** aus dem entstandenen digitalen Signal ein Kurzzeitleistungssignal und ein Langzeitleistungssignal gebildet werden und dass das Langzeitleistungssignal und das Kurzzeitleistungssignal verglichen werden indem die Differenz zwischen dem Kurzzeitleistungssignal und dem Langzeitleistungssignal einer Schwellwertschaltung zugeführt wird, deren Ausgangssignal dem über einen Schwellwert hinausgehenden Teil der Differenz entspricht, wobei der Schwellwert aus dem mit einem Faktor bewerteten Langzeitleistungssignal gebildet wird, und dass das Ausgangssignal der Schwellwertschaltung einem Maximumdetektor zugeleitet wird, der das Rahmen-Synchronisiersignal abgibt, wenn das Ausgangssignal der Schwellwertschaltung jeweils einen Maximalwert erreicht.

2. Verfahren nach Anspruch 1, **dadurch gekennzeichnet, dass** das Kurzzeitleistungssignal vor dem Vergleich einer Abtastraten-Dezimation und anschließend einer Mittelung unterzogen wird, wobei die Dezimationsrate in Abhängigkeit von dem jeweiligen Modus des empfangenen Signals einstellbar ist und die Mittelung über eine konstante Zahl von Abtastwerten erfolgt.

3. Verfahren nach einem der Ansprüche 1 oder 2, **dadurch gekennzeichnet, dass** digitale Signal einer I/Q-Demodulation unterzogen wird und eine Inphase- und eine Quadraturkomponente des demodulierten digitalen Signals zur Bildung des Kurzzeitleistungssignals und des Langzeitleistungssignals herangezogen wird.

4. Schaltungsanordnung zur Durchführung eines Verfahrens zur Ableitung eines Rahmen-Synchronisiersignals aus einem **empfangenen** trägerfrequenten Signal, das digitale Informationen in einer Rahmenstruktur enthält und in mindestens einem Zeitschlitz jeweils eines Rahmens eine gegenüber anderen Zeitschlitzen verringerte Amplitude aufweist, mit Mitteln zur Umsetzung des empfangenen Signals in einen niedrigenen Frequenzbereich und mit Mitteln zur Analog/Digitalwandlung des umgesetzten Signals **dadurch gekennzeichnet, dass** ein Prozessor vorgesehen ist, in dem aus dem digitalisierten Signal ein Kurzzeitleistungssignal und ein Langzeitleistungssignal gebildet werden, in dem das Langzeitleistungssignal und das Kurzzeitleistungssignal verglichen werden indem die Differenz zwischen dem Kurzzeitleistungssignal und dem Langzeitleistungssignal einer Schwellwertschaltung zugeführt wird, deren Ausgangssignal dem über einen Schwellwert hinausgehenden Teil der Differenz entspricht, wobei der Schwellwert aus dem mit einem Faktor bewerteten Langzeitleistungssignal gebildet wird, in dem das Ausgangssignal der Schwellwertschaltung einem Maximumdetektor zugeleitet wird, der das Rahmen-Synchronisiersignal abgibt, wenn das Ausgangssignal der Schwellwertschaltung jeweils einen Maximalwert erreicht.

## Claims

1. Method for derivation of a frame synchronization signal from a received carrier-frequency signal which contains digital information in a frame structure and whose amplitude in at least one time slot in each frame is less than that in the other time slots, with the received signal being converted to a lower frequency range and the converted signal being subjected to analogue/digital conversion, **characterized in that** a short-term power signal and a long-term power signal are formed from the resultant digital signal, and **in that** the long-term power signal and the short-term power signal are compared by supplying the difference between the short-term power signal and the long-term power signal to a threshold value circuit, whose output signal corresponds to that part of the difference which is beyond a threshold value, with the threshold value being formed from the long-term power signal weighted by a factor, and that the output signal from the threshold value circuit is passed to a maximum detector, which emits the frame synchronization signal whenever the output signal from the threshold value circuit reaches a maximum value.

2. Method according to Claim 1, **characterized in that** the short-term power signal is subtracted before the comparison of sampling rate decimation and subsequent averaging, with the decimation rate being adjustable as a function of the respective mode of the received signal, and the averaging being carried out over a constant number of sample values.

3. Method according to one of Claims 1 or 2, **characterized in that** the digital signal is subjected to I/Q demodulation, and an in-phase component and a quadrature component of the demodulated digital signal are used to form the short-term power signal and the long-term power signal.

4. Circuit arrangement for carrying out a method for derivation of a frame synchronization signal from a received carrier-frequency signal, which contains digital information in a frame structure and whose amplitude in at least one time slot in each frame is less than that in the other time slots, having means for conversion of the received signal to a lower frequency range, and having means for analogue/digital conversion of the converted signal, **characterized in that** a processor is provided in which a short-term power signal and a long-term power signal are formed from the digitized signal, in which the long-term power signal and the short-term power signal are compared by supplying the difference between the short-term power signal and the long-term power signal to a threshold value circuit whose output signal corresponds to that part of the difference which is beyond a threshold value, with the threshold value being formed from the long-term power signal weighted by a factor, in which the output signal from the threshold value circuit is passed to a maximum detector, which emits the frame synchronization signal whenever the output signal from the threshold value circuit reaches a maximum value.

## Revendications

1. Procédé de dérivation d'un signal de verrouillage ou synchronisation de trame, à partir d'un signal de fréquence porteuse reçu, qui contient des informations numériques dans une structure de trame et présente dans au moins un créneau de temps de chaque fois une trame une amplitude réduite par rapport à d'autres créneaux de temps, le signal reçu étant transféré dans une plage de fréquence plus basse et le signal transféré étant soumis à une transformation analogique/numérique,
**caractérisé en ce qu'**
un signal à brève exécution et un signal à longue exécution sont formés à partir du signal analogique généré, le signal à longue exécution et le signal à brève exécution sont comparés et la différence entre le signal à brève exécution et le signal à longue exécution est envoyée vers un circuit de seuil, dont le signal de sortie correspond à la partie de la différence qui dépasse une valeur de seuil, la valeur de seuil étant formée à partir du signal à longue exécution estimé à l'aide d'un facteur, le signal de sortie du circuit de seuil est transmis à un détecteur de maximum qui émet le signal de synchronisation de trame lorsque le signal de sortie du circuit de seuil atteint respectivement une valeur maximale.

2. Procédé selon la revendication 1,
**caractérisé en ce que**
le signal à brève exécution, avant la comparaison, est soumis à une décimation de taux d'échantillonnage puis à un calcul de moyenne, le taux de décimation étant réglable en fonction du mode respectif du signal reçu et le calcul de moyenne s'effectuant par le biais d'un nombre constant de valeurs d'échantillonnage.

3. Procédé selon l'une des revendications 1 ou 2,
**caractérisé en ce que**
le signal numérique est soumis à une démodulation I/Q, et une composante en phase et une composante de quadrature du signal numérique . démodulé sont utilisées pour la formation du signal à brève exécution et du signal à longue exécution.

4. Circuit permettant de mettre en oeuvre un procédé de dérivation d'un signal de verrouillage ou synchronisation de trame à partir d'un signal de fréquence porteuse reçu, qui contient des informations numériques dans une structure de trame et présente dans au moins un créneau de temps de chaque fois une trame une amplitude réduite par rapport à d'autres créneaux de temps, comportant des moyens pour transférer le signal reçu dans une plage de fréquences plus basse et comportant des moyens pour transformer de façon analogique/numérique le signal transféré,
**caractérisé en ce qu'**
un processeur forme un signal à brève exécution et un signal à longue exécution à partir du signal numérisé, compare le signal à longue exécution et le signal à brève exécution, envoie la différence entre le signal à brève exécution et le signal à longue exécution vers un circuit de seuil dont le signal de sortie correspond à la partie de la différence qui dépasse une valeur de seuil, la valeur de seuil étant formée à partir du signal à longue exécution estimé à l'aide d'un facteur, et transmet le signal de sortie du circuit de seuil à un détecteur de maximum qui émet le signal de synchronisation de trame lorsque le signal de sortie du circuit de seuil atteint respectivement une valeur maximale.
